# EUROPEAN PATENT SPECIFICATION

(11) **EP 3 764 518 B1**
(45) Date of publication and mention of the grant of the patent: **06.12.2023**
(21) Application number: 20185338.9
(22) Date of filing: 10.07.2020
(51) Int. Cl.: H02K 5/132, F04D 13/10, F04D 29/62

(54) **SUBMERSIBLE MOTOR ASSOCIABLE WITH A PUMP**
MIT EINER PUMPE ASSOZIIERBARER TAUCHMOTOR
MOTEUR SUBMERSIBLE POUVANT ÊTRE ASSOCIÉ À UNE POMPE

(30) Priority: 11.07.2019 IT 201900011481
(43) Date of publication of application: 13.01.2021
(73) Proprietor: Pedrollo S.p.a., 37047 San Bonifacio (Verona) (IT)
(72) Inventor: PEDROLLO, Silvano, 37047 San Bonifacio (VR) (IT)
(74) Representative: Manzella & Associati

(56) References cited:
- WO-A2-2010/100659
- US-A1- 2018 013 335

## Description

### Technical field

The present invention relates to a submersible motor, which can be associated with a pump, and a device for fixing the submersible motor to the pump.

### Prior art

The use of submersible electric motors adapted to be associated, in use, with a respective pump, for domestic, agricultural or industrial uses, in particular for pumping water, is currently known.

More specifically, known submersible motors comprise a body having a mainly cylindrical shape, for example made of stainless steel, which houses inside a motor shaft, arranged along a longitudinal axis of the cylindrical body, and a motor unit adapted to rotate the shaft.

The cylindrical body is equipped with a coupling end, from which a coupling end portion of the drive shaft protrudes. The end coupling portion of the motor shaft can be connected, through a coupling, to a shaft of a pump, adapted to be arranged coaxially to the motor shaft, so that the rotation motion of the motor shaft is transmitted to the shaft of the pump.

The pump comprises a body of a mainly cylindrical shape similar to the cylindrical body of the motor. Inside the cylindrical body, the pump houses the aforementioned pump shaft and an impeller assembly, integral with the pump shaft so as to rotate with it. The cylindrical body of the pump is equipped with a base portion, which can be associated with the coupling end of the cylindrical body of the motor, so that the cylindrical body of the motor and the cylindrical body of the pump are rigidly coupled and substantially coaxial.

The base portion of the pump has at least one suction opening, which allows the water to be pumped to enter the cylindrical body of the pump. The cylindrical body of the pump internally forms a channel, configured in such a way that the water can pass through the impeller assembly and therefore be expelled from a delivery opening located at an opposite end of the cylindrical body of the pump.

In practice, the cylindrical body of the motor and the cylindrical body of the pump, once coupled, form a single substantially cylindrical rigid body, which can be entirely submerged in the liquid to be pumped.

It is therefore evident that the means used for fixing the cylindrical body of the motor to the respective cylindrical body of the pump are of great importance for the correct operation of the pump. These fixing means must in fact be resistant, reliable and simple to fit.

Patent EP2404361 illustrates a submersible motor of the aforementioned type, in which the coupling end of the cylindrical body of the motor provides a base wall, substantially orthogonal to the longitudinal axis of the cylindrical body of the motor. The base wall is equipped with one or more threaded holes, having respective axes substantially parallel to the aforementioned longitudinal axis of the cylindrical body of the motor, each suitable for receiving a respective cylindrical connection member (known as stud) equipped with threaded ends. A first threaded end of the stud is adapted to be inserted directly into the threaded hole of the base wall of the cylindrical body, while the opposite end of the stud is adapted to be coupled, for example by means of a through hole and a locking nut, to the base portion of the pump. In this way it is possible to rigidly fix the base wall of the cylindrical body of the motor to the pump. The cylindrical body of the motor further comprises a tubular jacket, in which the aforementioned coupling end of the cylindrical body of the motor is able to be engaged and locked in position. For this purpose, the coupling end of the cylindrical body of the motor provides at least one shaped hole, equipped with an internal threaded portion. The shaped hole has a substantially orthogonal and radial axis with respect to the aforementioned longitudinal axis of the cylindrical body of the motor. The tubular jacket is equipped with a through hole, so that it can be coupled, by means of a screw and a locking bush, to the shaped hole. In this way it is possible to rigidly fix the tubular jacket to the coupling end of the cylindrical body of the motor.

In practice, according to the prior art, in order to fix the submersible motor to a respective pump it is necessary to fix the coupling end of the cylindrical body of the motor to the base portion of the pump, by means of one or more studs; engage the coupling end in the tubular jacket and, independently, center and lock the tubular jacket against the coupling end by means of at least one screw and a respective fastening bush.

It has been found that this solution, although very widespread, can be further improved.

### Disclosure

The present invention aims at solving the mentioned problems, by devising a submersible motor, which can be associated with a pump, and a device for fixing the submersible motor to the pump, having improved features with respect to the known fixing devices.

Within this aim, a further object of the present invention is to provide a fixing device which is accurate, simple and quick to mount.

The invention further aims at providing a fixing device which is of a simple constructive and functional concept, which is certainly reliable in operation, versatile in use, and relatively inexpensive.

The mentioned aims are achieved, according to the present invention, by the submersible electric motor associable with a pump according to claim 1.

According to the invention, the submersible electric motor associable with a pump comprises a mainly cylindrical body having a longitudinal axis; an electric motor assembly housed in the mainly cylindrical body; a drive shaft, coaxial to said longitudinal axis, operable in rotation by said motor assembly and housed at least partially in the mainly cylindrical body.

The mainly cylindrical body comprises an external tubular jacket and a coupling end which can be inserted into the external tubular jacket.

The coupling end has a base wall and a side wall.

The motor also comprises a device for fixing the motor to the pump.

The fastening device comprises at least a first connecting member, which may be inserted in a first hole made in the base wall, and at least a second connecting member which may be inserted in a second hole made in the side wall and in a third hole, made in the outer tubular jacket.

The first connecting member is also connectable to a base portion of the pump.

The first and second holes are communicating, and the first and second connecting members are configured so that the insertion of the first connecting member in the first hole determines the locking of the second connecting member inserted in the second hole and in the third hole, so as to obtain the relative positioning and locking of the outer tubular jacket and of the coupling end.

Preferably, the second connecting member is formed by a body having a recessed intermediate portion capable of receiving a portion of the first connecting member.

According to the invention, said second connecting member is formed by a body comprising a cylindrical intermediate portion having on each side respective cylindrical end portions, said cylindrical end portions having respective diameters greater than the diameter of said cylindrical intermediate portion, so as to form a sort of groove.

Preferably, the diameters of said cylindrical end portions are the same.

Preferably, the base wall has a flat shape.

Preferably, the base wall is substantially orthogonal to the longitudinal axis.

Preferably, the side wall has a predominantly cylindrical shape.

Preferably, the side wall, in an assembled configuration, is substantially concentric to the tubular jacket, being inserted internally to it.

Preferably, the first hole is substantially orthogonal to the base wall, and is therefore substantially parallel to the longitudinal axis.

Preferably, the second hole is oriented in a radial direction with respect to the longitudinal axis and is substantially orthogonal to the first hole.

Preferably, the first hole is provided with a second end which opens at an intermediate portion of the second hole. The second end of the first hole is opposite to a first end which opens at the base wall.

According to the invention, said second connecting member comprises, laterally with respect to a said cylindrical end portion, a further cylindrical end portion having a diameter greater than the diameter of said cylindrical portions and with respect to the diameter of said second hole.

Preferably, the second connecting member and/or the second hole do not comprise threaded portion which can be mutually connected.

According to the invention, said first connecting member comprises a first threaded portion, adapted to be connected with a respective threaded portion of said first hole, and an end portion, adapted to engage said groove or said recessed portion of said second connecting member.

Preferably, the first connecting member comprises a second threaded portion, adapted to couple with a base portion of the pump.

Preferably, the first connecting member comprises an intermediate abutment portion, interposed between the first threaded portion and the second threaded portion.

Preferably, the cylindrical end portions of the second connecting member are connected to said cylindrical intermediate portion through flaring side walls, so as to configure a conical coupling between said flaring end portion of said first connecting member and the groove of the second connecting member.

Preferably, the connecting device provides several connecting assemblies each comprising a first connecting member, a second connecting member, a first hole, a second hole and a third hole.

Preferably, the connecting device provides two connecting assemblies each comprising a first connecting member, a second connecting member, a first hole, a second hole and a third hole.

Preferably, the connecting assemblies are arranged in radially opposite positions with respect to the longitudinal axis L.

### Description of drawings

The details of the invention will become more evident from the detailed description of a preferred embodiment of the submersible electric motor which may be associated with a pump according to the invention, illustrated by way of example in the accompanying drawings, where:
Figure 1 shows a partially sectioned perspective view of an end portion of the submersible electric motor which may be associated with a pump, according to the invention;
Figure 2 shows a side view of the end portion illustrated in Figure 1;

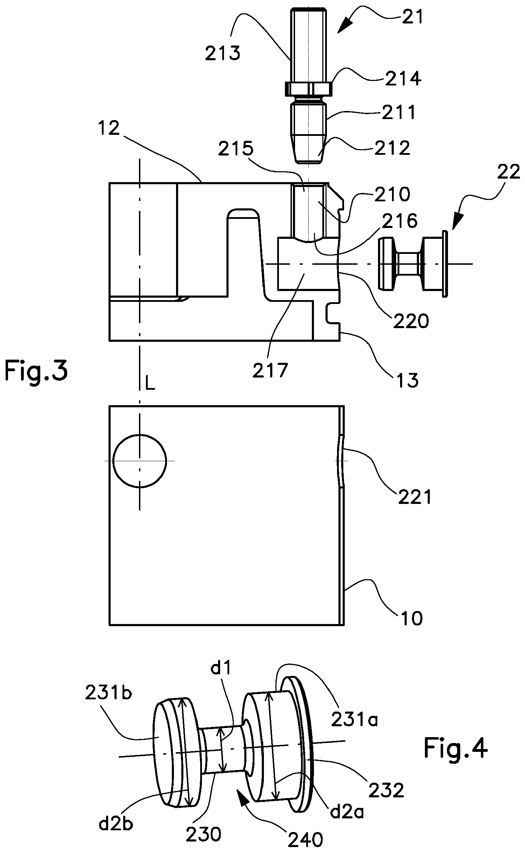

Figure 3 shows a sectional view of a detail of the end portion illustrated in Figure 2, in an unassembled configuration;
Figure 4 shows a perspective view of a connecting member according to the invention.

### Best mode

With particular reference to these figures, the submersible electric motor according to the invention is indicated as a whole with reference number 100.

The motor 100 comprises a mainly cylindrical body 1, which has a longitudinal axis L. The cylindrical body 1 comprises an internal cavity in which an electric motor assembly of known type is housed. The motor 100 also includes a motor shaft, which is coaxial to the L axis and rotatable by the motor assembly, housed at least partially in the internal cavity of the body 1.

The cylindrical body 1 is equipped with an external tubular jacket 10 and a coupling end 11 which may be inserted into the tubular jacket 10. The coupling end 11 in turn provides a base wall 12, equipped with at least a first hole 210, and a side wall 13, equipped with at least a second hole 220. The base wall 12 has a flat shape and is substantially orthogonal to the longitudinal axis L, so as to form a base of the cylindrical body 1. The side wall 13 has a mainly cylindrical shape and, in an assembled configuration, is substantially concentric to the tubular jacket 10, being inserted inside it. The tubular jacket 10 is in turn provided with at least a third hole 221. The first hole 210 is substantially orthogonal to the base wall 12, and, therefore, it is substantially parallel to the L axis. The second hole 220 is oriented in a radial direction with respect to the L axis and is substantially orthogonal to the first hole 210. In an assembled configuration, the third hole 221 of the tubular jacket 10 coincides with the second hole 220 of the side wall 13. The cylindrical body 1 of the motor 100 may be associated with a pump, at the base wall 12 of the coupling end 11.

According to the invention, the first hole 210 and the second hole 220 are communicating. In particular, the first hole 210 is provided with a second end 216 which leads into an intermediate portion 217 of the second hole 220. The second end 216 of the first hole 210 is opposite to a first end 215 which leads into the base wall 12.

The motor 100 also comprises a device 20 for fixing the motor to the pump. The fixing device 20 comprises a first connecting member 21, shaped by an elongated body which may be inserted in the first hole 210 of the base wall 12. The first connecting member 21 may also be coupled to a base portion of the pump.

The first connecting member 21 comprises a first threaded portion 211, suitable for coupling with a respective threaded portion of the first hole 210. Preferably, the first connecting member 21 also comprises a flared end portion 212.

According to an embodiment illustrated in the figures, the first connecting member 21 also comprises a second threaded portion 213, suitable for coupling with a base portion of the pump, and an intermediate abutment portion 214, interposed between the first threaded portion 211 and the second threaded portion 213.

The fixing device 20 also comprises a second connecting member 22, shaped by a body which is to be inserted in the second hole 220 of the side wall 13 and in the third hole 221 of the external tubular jacket 10.

The second connecting member 22 is formed by a body having a recessed intermediate portion, capable of receiving a portion of the first connecting member 21.

The second connecting member 22 is formed by a body comprising a cylindrical intermediate portion 230 having on each side respective cylindrical end portions 231a, 231b. The cylindrical end portions 231a, 231b have respective diameters d2a, d2b greater than the diameter d1 of the cylindrical intermediate portion 230, so that a sort of groove 240 is formed.

According to a preferred embodiment, the diameters d2a, d2b of the cylindrical end portions 231a, 231b are the same.

The second connecting member comprises, laterally with respect to a said cylindrical end portion 231a - not belonging to the present invention - a flange having a protruding edge 232 with respect to the diameter d2a of the cylindrical end portion 231a, or - according to the invention-a further cylindrical end portion 232 having a diameter greater than the diameter of the cylindrical portions 231a, 231b and than the diameter of the second hole 220.

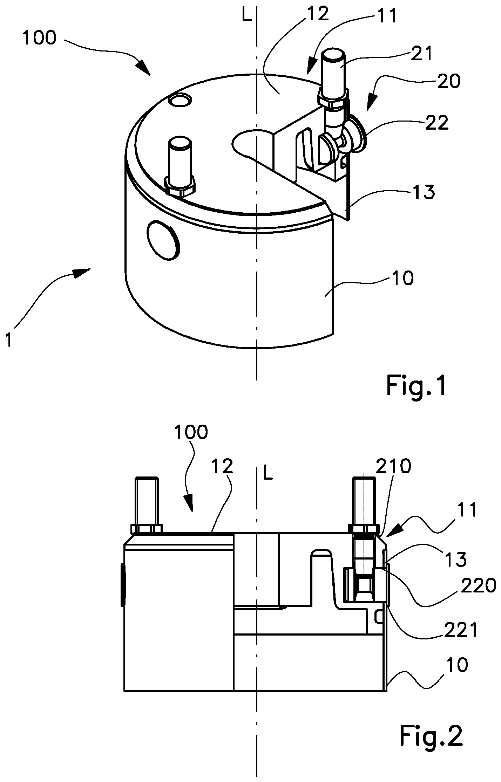

Basically, it is possible to assemble the submersible electric motor 100 by inserting the coupling end 11 in the external tubular jacket 10, so that the respective holes 220, 221 match. Subsequently, the second connecting member 22 is inserted into the matching holes 200, 221. The second connecting member 22 is fully inserted, so that the protruding edge 232 is put into contact with the tubular jacket 10. In this configuration, the groove 240 of the second connecting member 22 is arranged at the intermediate portion 217 of the second hole 220. Then, the first connecting member 21 is engaged by screwing the first threaded portion 211 into the hole 210. The first connecting member 21 is screwed down until the intermediate abutment portion 214 is brought into contact with the base wall 12. In this configuration, the end portion 212 of the first connecting member 21 protrudes from the end 216 of the first hole 210 in the intermediate portion 217 of the second hole 220 and engages the groove 240 of the second connecting member 22 (see Figures 1 and 2).

In practice, the engagement of the first connecting member 21 in the first hole 210 determines the locking of the second connecting member 22 in the second hole 220, so as to obtain the relative positioning and locking of the external tubular jacket 10 and of the coupling end 11.

Subsequently, the first connection member 21 is coupled with the base portion of the pump, using the threaded portion 213, for example by means of a locking nut. The end portion of coupling of motor shaft is finally coupled to the pump shaft, through a joint, so that the rotational motion of the motor shaft is transmitted to the pump shaft.

It is noted that - not belonging to the present invention - the first connecting member 21 and the second connecting member 22 may also have different conformations, provided they are able to achieve the described technical effect. For example, the second connecting member 22 may form a hole or a slot, in an intermediate portion thereof, configured to receive an end portion of the first connecting member 21.

The fixing device according to the invention therefore achieves the purpose of improving the fixing devices commonly used in the prior art.

In particular, the aim of providing a fixing device that is precise, simple and quick to install is achieved.

The fixing device described by way of example is subject to numerous changes according to the various needs. The scope is defined by the claims.

The described connecting device provides at least a first connecting member and a second connecting member, capable of cooperating with a first hole, with a second hole and with a third hole, as illustrated. Advantageously, it is possible to provide that the connecting device includes several connecting assemblies each comprising a first connecting member, a second connecting member, a first hole, a second hole and a third hole. Preferably, these assemblies are arranged in radially opposite positions with respect to the longitudinal axis L (see for example Figures 1 and 2, which show two radially opposite connection assemblies).

## Claims

1. A submersible electric motor (100) associable with a pump, said submersible electric motor (100) comprising
a mainly cylindrical body (1) having a longitudinal axis (L);
an electric motor assembly housed in said mainly cylindrical body (1); a motor shaft, coaxial with said longitudinal axis (L), rotatable by said motor assembly and housed at least partially in said mainly cylindrical body (1);
said mainly cylindrical body (1) comprising an outer tubular jacket (10) and a coupling end (11) insertable in said outer tubular jacket (10);
said coupling end (11) being provided with a base wall (12) and a side wall (13);
a device (20) for fixing said motor to said pump;
said fixing device (20) comprising at least a first connecting member (21), insertable in a first hole (210) made in said base wall (12), and at least a second connecting member (22) insertable in a second hole (220) made in said side wall (13) and in a third hole (221), made in said outer tubular jacket (10);
said first connecting member (21) being also connectable to a base portion of said pump;
**characterized in that** said first and second holes (210, 220) are communicating, and said first and second connecting members (21, 22) are configured so that the insertion of the first connecting member (21) in the first hole (210) determines the locking of the second connecting member (22) inserted in said second hole (220) and in said third hole (221), so as to obtain the relative positioning and locking of said outer tubular jacket (10) and said coupling end (11); said first connecting member (21) having a first threaded portion (211), adapted to be connected with a respective threaded portion of the first hole (210); said first connecting member (21) having an end portion (212), adapted to engage a groove (240) of the second connecting member (22); said second connecting member (22) being formed by a body comprising a cylindrical intermediate portion (230) having on each side respective cylindrical end portions (231a, 231b), said cylindrical end portions (231a, 231b) having respective diameters (d2a, d2b) greater than the diameter (d1) of said cylindrical intermediate portion (230), so as to form said groove (240); said second connecting member (22) comprising, laterally with respect to a said cylindrical end portion (231a), a further cylindrical end portion (232) having a diameter greater than the diameter of said cylindrical portions (231a, 231b) and with respect to the diameter of said second hole (220).

2. A submersible electric motor as in claim 1, wherein said second connecting member (22) is formed by a body having a recessed intermediate portion capable of receiving a portion of said first connecting member (21).

3. A submersible electric motor as in claim 1 or 2, wherein said diameters (d2a, d2b) of said cylindrical end portions (231a, 231b) are the same.

4. A submersible electric motor as in any one of the preceding claims, wherein said second connecting member (22) and/or said second hole (220) do not comprise threaded portion which can be mutually connected.

5. A submersible electric motor as in claim 1, wherein said end portion (212) is flared.

6. A submersible electric motor as in claim 1, wherein said first connecting member (21) comprises a second threaded portion (213), adapted to be connected with a base portion of said pump, and an intermediate abutment portion (214), interposed between said first threaded portion (211) and said second threaded portion (213).

7. A submersible electric motor as in claims 1, wherein said cylindrical end portions (231a, 231b) of said second connecting member (22) are connected to said cylindrical intermediate portion (230) through flaring side walls, so as to configure a conical coupling between said flaring end portion (212) of said first connecting member (21) and said groove (240) of said second connecting member (22).

## Patentansprüche

1. Unterwasser-Elektromotor (100), der einer Pumpe zugeordnet werden kann, wobei der Unterwasser-Elektromotor (100) Folgendes umfasst
einen hauptsächlich zylindrischen Körper (1), der eine Längsachse (L) aufweist; eine Elektromotorbaugruppe, die in dem hauptsächlich zylindrischen Körper (1) untergebracht ist; eine Motorwelle, die zu der Längsachse (L) koaxial ist, die durch die Motorbaugruppe drehbar ist und mindestens teilweise in dem hauptsächlich zylindrischen Körper (1) untergebracht ist;
wobei der im Wesentlichen zylindrische Körper (1) einen äußeren rohrförmigen Mantel (10) und ein Kopplungsende (11), das in den äußeren rohrförmigen Mantel (10) einsetzbar ist, umfasst;
wobei das Kopplungsende (11) mit einer Bodenwand (12) und einer Seitenwand (13) versehen ist;
eine Vorrichtung (20) zum Befestigen des Motors an der Pumpe;
wobei die Befestigungsvorrichtung (20) mindestens ein erstes Verbindungselement (21), das in ein erstes Loch (210), das in der Basiswand (12) hergestellt ist, einsetzbar ist, und mindestens ein zweites Verbindungselement (22) umfasst, das in ein zweites Loch (220), das in der Seitenwand (13) hergestellt ist, und in ein drittes Loch (221), das in dem äußeren rohrförmigen Mantel (10) hergestellt ist, einsetzbar ist;
wobei das erste Verbindungselement (21) auch mit einem Basisabschnitt der Pumpe verbindbar ist;
**dadurch gekennzeichnet, dass** das erste und das zweite Loch (210, 220) miteinander in Verbindung stehen und das erste und das zweite Verbindungselement (21, 22) so konfiguriert sind, dass das Einsetzen des ersten Verbindungselements (21) in das erste Loch (210) das Verriegeln des zweiten Verbindungselements (22) bestimmt, das in das zweite Loch (220) und in das dritte Loch (221) eingesetzt ist, um das relative Positionieren und Verriegeln des äußeren rohrförmigen Mantels (10) und des Kopplungsendes (11) zu erhalten;
wobei das erste Verbindungselement (21) einen ersten Gewindeabschnitt (211) aufweist, der dazu angepasst ist, mit einem jeweiligen Gewindeabschnitt des ersten Lochs (210) verbunden zu sein; wobei das erste Verbindungselement (21) einen Endabschnitt (212) aufweist, der dazu angepasst ist, in eine Nut (240) des zweiten Verbindungselements (22) einzugreifen; wobei das zweite Verbindungselement (22) durch einen Körper gebildet ist, der einen zylindrischen Zwischenabschnitt (230) aufweist, der auf jeder Seite jeweilige zylindrische Endabschnitte (231a, 231b) aufweist, die zylindrischen Endabschnitte (231a, 231b) jeweilige Durchmesser (d2a, d2b) aufweisen, die größer sind als der Durchmesser (d1) des zylindrischen Zwischenabschnitts (230), um die Nut (240) zu bilden; wobei das zweite Verbindungselement (22) seitlich in Bezug auf einen zylindrischen Endabschnitt (231a) einen weiteren zylindrischen Endabschnitt (232) umfasst, der einen Durchmesser aufweist, der größer als der Durchmesser der zylindrischen Abschnitte (231a, 231b) und in Bezug auf den Durchmesser des zweiten Lochs (220) ist.

2. Unterwasser-Elektromotor nach Anspruch 1, wobei das zweite Verbindungselement (22) durch einen Körper gebildet ist, der einen vertieften Zwischenabschnitt aufweist, der in der Lage ist, einen Abschnitt des ersten Verbindungselements (21) aufzunehmen.

3. Unterwasser-Elektromotor nach Anspruch 1 oder 2, wobei die Durchmesser (d2a, d2b) der zylindrischen Endabschnitte (231a, 231b) gleich sind.

4. Unterwasser-Elektromotor nach einem der vorstehenden Ansprüche, wobei das zweite Verbindungselement (22) und/oder das zweite Loch (220) keinen Gewindeabschnitt, der wechselseitig verbunden werden kann, umfassen.

5. Unterwasser-Elektromotor nach Anspruch 1, wobei der Endabschnitt (212) aufgeweitet ist.

6. Unterwasser-Elektromotor nach Anspruch 1, wobei das erste Verbindungselement (21) einen zweiten Gewindeabschnitt (213) umfasst, der angepasst ist, um mit einem Basisabschnitt der Pumpe verbunden zu werden, und einen Zwischenanschlagabschnitt (214), der zwischen dem ersten Gewindeabschnitt (211) und dem zweiten Gewindeabschnitt (213) eingefügt ist.

7. Unterwasser-Elektromotor nach Anspruch 1, wobei die zylindrischen Endabschnitte (231a, 231b) des zweiten Verbindungselements (22) mit dem zylindrischen Zwischenabschnitt (230) durch aufgeweitete Seitenwände verbunden sind, um eine konische Kopplung zwischen dem aufgeweiteten Endabschnitt (212) des ersten Verbindungselements (21) und der Nut (240) des zweiten Verbindungselements (22) zu konfigurieren.

## Revendications

1. Moteur (100) électrique submersible pouvant être associé à une pompe, ledit moteur (100) électrique submersible comprenant
un corps (1) principalement cylindrique ayant un axe longitudinal (L) ;
un ensemble de moteur électrique logé dans ledit corps (1) principalement cylindrique ; un arbre de moteur, coaxial audit axe longitudinal (L), pouvant être tourné par ledit ensemble de moteur et logé au moins partiellement dans ledit corps (1) principalement cylindrique ;
ledit corps (1) principalement cylindrique comprenant une enveloppe (10) tubulaire extérieure et une extrémité (11) de couplage pouvant être insérée dans ladite enveloppe (10) tubulaire extérieure ;
ladite extrémité (11) de couplage étant pourvue d'une paroi de base (12) et d'une paroi latérale (13) ;
un dispositif (20) de fixation dudit moteur à ladite pompe ;
ledit dispositif (20) de fixation comprenant au moins un premier élément de liaison (21), pouvant être inséré dans un premier trou (210) pratiqué dans ladite paroi de base (12), et au moins un second élément de liaison (22) pouvant être inséré dans un deuxième trou (220) pratiqué dans ladite paroi latérale (13) et dans un troisième trou (221), pratiqué dans ladite enveloppe (10) tubulaire extérieure ;
ledit premier élément de liaison (21) pouvant également être relié à une partie de base de ladite pompe ;
**caractérisé en ce que** lesdits premier et deuxième trous (210, 220) communiquent, et lesdits premier et second éléments de liaison (21, 22) sont configurés de telle sorte que l'insertion du premier élément de liaison (21) dans le premier trou (210) détermine le verrouillage du second élément de liaison (22) inséré dans ledit deuxième trou (220) et dans ledit troisième trou (221), de manière à obtenir le positionnement et le verrouillage relatifs de ladite enveloppe (10) tubulaire extérieure et de ladite extrémité (11) de couplage ; ledit premier élément de liaison (21) ayant une première partie filetée (211), adaptée pour être reliée à une partie filetée respective du premier trou (210) ; ledit premier élément de liaison (21) ayant une partie d'extrémité (212), adaptée pour venir en prise avec une rainure (240) du second élément de liaison (22) ; ledit second élément de liaison (22) étant formé par un corps comprenant une partie intermédiaire cylindrique (230) ayant de chaque côté des parties d'extrémité cylindriques (231a, 231b) respectives, lesdites parties d'extrémité cylindriques (231a, 231b) ayant des diamètres (d2a, d2b) respectifs supérieurs au diamètre (d1) de ladite partie intermédiaire cylindrique (230), de manière à former ladite rainure (240) ;
ledit second élément de liaison (22) comprenant, latéralement par rapport à ladite partie d'extrémité cylindrique (231a), une autre partie d'extrémité cylindrique (232) ayant un diamètre supérieur au diamètre desdites parties cylindriques (231a, 231b) et par rapport au diamètre dudit deuxième trou (220).

2. Moteur électrique submersible selon la revendication 1, dans lequel ledit second élément de liaison (22) est formé par un corps ayant une partie intermédiaire en retrait capable de recevoir une partie dudit premier élément de liaison (21).

3. Moteur électrique submersible selon la revendication 1 ou 2, dans lequel lesdits diamètres (d2a, d2b) desdites parties d'extrémité cylindriques (231a, 231b) sont les mêmes.

4. Moteur électrique submersible selon l'une quelconque des revendications précédentes, dans lequel ledit second élément de liaison (22) et/ou ledit deuxième trou (220) ne comprennent pas de parties filetées qui peuvent être mutuellement reliées.

5. Moteur électrique submersible selon la revendication 1, dans lequel ladite partie d'extrémité (212) est évasée.

6. Moteur électrique submersible selon la revendication 1, dans lequel ledit premier élément de liaison (21) comprend une seconde partie filetée (213), adaptée pour être connectée à une partie de base de ladite pompe, et une partie de butée intermédiaire (214), interposée entre ladite première partie filetée (211) et ladite seconde partie filetée (213).

7. Moteur électrique submersible selon la revendication 1, dans lequel lesdites parties d'extrémité cylindriques (231a, 231b) dudit second élément de liaison (22) sont reliées à ladite partie intermédiaire cylindrique (230) à travers des parois latérales évasées, de manière à configurer un couplage conique entre ladite partie d'extrémité évasée (212) dudit premier élément de liaison (21) et ladite rainure (240) dudit second élément de liaison (22).
